# FASCICULE DE BREVET EUROPEEN

(11) **EP 1 042 148 B1**
(45) Date de publication et mention de la délivrance du brevet: **05.06.2002**
(21) Numéro de dépôt: 98963583.4
(22) Date de dépôt: 21.12.1998
(51) Int. Cl.: B60T 7/04, B60T 15/14

(54) **DISPOSITIF COMPORTANT UN MAITRE-CYLINDRE ET UN SIMULATEUR DE COURSE POUR INSTALLATION DE FREINAGE ELECTRO-HYDRAULIQUE DE VEHICULE AUTOMOBILE**
HAUPTZYLINDER UND WEGSIMULATOR ANORDNUNG FÜR ELEKTROHYDRAULISCHE KRAFTFAHRZEUGBREMSANLAGE
MASTER CYLINDER AND TRAVEL SIMULATOR ARRANGEMENT FOR A MOTOR VEHICLE ELECTRO-HYDRAULIC BRAKE INSTALLATION

(30) Priorité: 22.12.1997 FR 9716219
(43) Date de publication de la demande: 11.10.2000
(73) Titulaire: Bosch Systemes de Freinage, 93700 Drancy (FR)
(72) Inventeur: BOURLON, Philippe, F-93300 Aubervilliers (FR); LEVRAI, Roland, F-93240 Stains (FR); QUIRANT, Werner, F-93500 Pantin (FR)
(74) Mandataire: Hurwic, Aleksander Wiktor
(86) Numéro de dépôt international: FR9802814
(87) Numéro de publication internationale: WO9932337

(56) Documents cités:
- DE-A- 19 502 925
- DE-A- 19 538 794
- GB-A- 2 100 816

## Description

La présente invention concerne un dispositif comportant un maître-cylindre ainsi qu'un simulateur de course d'actionnement de frein, destiné en particulier à équiper une installation de freinage électro-hydraulique de véhicule automobile.

De telles installations de freinage électro-hydraulique comportent de façon classique un système de freinage de service à source d'énergie extérieure et un système de freinage de secours à source d'énergie musculaire, ces deux systèmes de freinage étant commandés par un maître-cylindre de frein dont la pédale d'actionnement est située dans l'habitacle du véhicule.

Le système de freinage à source d'énergie extérieure comporte un générateur de fluide de freinage sous haute pression, comportant une pompe hydraulique associée à un accumulateur de pression hydraulique. Lors d'une action de freinage effectuée par ce système, la pression fournie par l'accumulateur de pression hydraulique est communiquée aux cylindres de freins de roues par l'intermédiaire d'au moins une électrovalve de façon à ce que la pression en sortie de cette électrovalve ait une valeur qui soit fonction de la course de la pédale de frein et de la force avec laquelle cette pédale est actionnée, ou fonction de la force avec laquelle un levier de frein à main est actionné, ou encore fonction de la pression de liquide de frein qui est produite à l'aide de la pédale de frein à pied ou à l'aide du levier de frein à main.

Dans un tel fonctionnement en mode de freinage de service, le maître-cylindre est normalement isolé de l'installation de freinage du véhicule au moyen d'une électrovalve d'arrêt. Il en résulte alors que le liquide de frein ne peut pas refluer du maître-cylindre vers les cylindres de freins de roues et que son piston ne peut pas se déplacer ou ne peut se déplacer que d'une course minimale. Cependant, pour que la pédale de freinage ou le levier de frein à main aient une course normale d'actionnement, dépendant de la force avec laquelle ils sont actionnés, on utilise un dispositif simulateur de course d'actionnement de frein.

Un tel dispositif simulateur de course d'actionnement de frein est connu par exemple par le document US-A-4 462 642. Le dispositif simulateur de course d'actionnement de frein connu comporte un cylindre de simulateur avec un piston de simulateur, susceptible de se déplacer dans ce cylindre lorsqu'il est sollicité par la pression du liquide de freinage provenant du maître-cylindre, à l'encontre de l'action d'un ressort et qui peut se déplacer à l'intérieur de ce cylindre.

En cas de défaillance du système de freinage à source d'énergie extérieure pour un mode de freinage de service, l'électrovalve d'arrêt est basculée pour permettre au maître-cylindre d'actionner lui-même les cylindres de freins de roues, pour un mode de fonctionnement en freinage de secours à source d'énergie musculaire fournie par le conducteur du véhicule.

Le dispositif simulateur de course d'actionnement de frein selon le document précité est relié hydrauliquement au maître-cylindre et à l'électrovalve d'arrêt et communique même en mode de freinage de secours avec le maître-cylindre de frein. Le simulateur d'actionnement de frein connu a ainsi pour inconvénient d'absorber une certaine quantité de liquide de freinage en mode de freinage de secours à énergie musculaire, ce qui augmente inutilement la course de la pédale de freinage et ôte de l'efficacité au freinage de secours.

La présente invention se place dans ce contexte en ce sens qu'elle propose, de façon connue, un dispositif comportant un maître-cylindre pour une installation de freinage hydraulique de véhicule, l'installation comportant un système de freinage de service à énergie extérieure et un système de freinage de secours à énergie musculaire pour actionner des cylindres de moteurs de freins de roues, le maître-cylindre étant susceptible d'être isolé des cylindres de freins de roues à l'aide d'au moins une valve d'arrêt pour un freinage de service à énergie extérieure, ainsi qu'un simulateur de course d'actionnement de frein comportant un piston de simulateur définissant une chambre de simulation susceptible de recevoir du liquide de frein provenant du maître-cylindre de frein, un élément élastique de simulateur sollicitant le piston de simulateur à l'encontre de la pression de liquide de frein dans la chambre de simulation, le maître-cylindre étant du type tandem et comportant un alésage dans lequel des pistons primaire et secondaire sont montés coulissants à partir de positions de repos respectives et y délimitent respectivement des chambres de travail primaire et secondaire.

Dans ce contexte, la présente invention a pour objet de proposer un maître-cylindre, associé à un dispositif de simulation de course d'actionnement de frein, pour une installation de freinage électro-hydraulique de véhicule automobile, qui permette un mode de freinage de secours à énergie musculaire, dans lequel la totalité de cette énergie musculaire est utilisée pour le freinage de secours sans que cette énergie soit dissipée dans des dispositifs annexes, ce maître-cylindre devant être fiable en toutes circonstances, de fabrication aisée et de coûts réduits.

A cette fin, le maître-cylindre de l'invention, par ailleurs conforme au préambule ci-dessus, est caractérisé en ce que la chambre de simulation présente un orifice d'entrée débouchant dans l'alésage, et en ce que des moyens de communication sélective relient la chambre de simulation à la chambre de travail primaire lorsque le piston secondaire est dans sa position de repos, et isolent la chambre de simulation de la chambre de travail primaire lorsque le piston secondaire est déplacé de sa position de repos.

Selon un premier mode de réalisation de l'invention, les moyens de communication sélective comprennent une gorge périphérique formée dans l'alésage et un élément d'étanchéité porté par le piston secondaire et propre à obturer sélectivement l'alésage à distance de la gorge périphérique, la gorge périphérique étant disposée dans l'alésage entre le piston primaire et l'orifice d'entrée de la chambre de simulation, et l'élément d'étanchéité se trouvant sélectivement en regard de la gorge périphérique lorsque le piston secondaire est dans sa position de repos.

Selon un second mode de réalisation possible de l'invention, les moyens de communication sélective comprennent : un perçage axial pratiqué dans le piston secondaire et présentant une entrée s'ouvrant dans la chambre de travail primaire; un perçage radial pratiqué dans le piston secondaire et présentant une sortie communiquant en permanence avec la chambre de simulation et sélectivement mise en communication avec l'entrée du perçage axial; et un plongeur allongé, fixe par rapport à l'alésage, monté coulissant dans le perçage axial, et coopérant au moins avec le perçage axial du piston secondaire pour former un clapet hydraulique isolant sélectivement la sortie du perçage radial de l'entrée du perçage axial lorsque le piston secondaire est déplacé de sa position de repos.

Dans ce second mode de réalisation, le plongeur est par exemple en appui sur une broche traversant l'alésage.

Selon une première variante possible du second mode de réalisation de l'invention, le plongeur présente un perçage axial borgne et un passage radial communiquant avec le perçage axial borgne, le passage radial formant un premier siège du clapet hydraulique, étant sélectivement disposé en regard du perçage radial du piston secondaire lorsque ce piston secondaire est dans sa position de repos, et étant obturé par le perçage axial du piston secondaire, qui forme lui-même un second siège du clapet hydraulique, lorsque ce piston secondaire est déplacé de sa position de repos.

Selon une seconde variante possible du second mode de réalisation de l'invention, l'entrée du perçage axial du piston secondaire porte un joint annulaire qui forme un premier siège du clapet hydraulique, et qui est sélectivement obturé par le plongeur, qui forme lui-même un second siège du clapet hydraulique, lorsque le piston secondaire est déplacé de sa position de repos.

Dans ce second mode de réalisation, le plongeur est par exemple en appui sur une broche traversant l'alésage.

D'autres buts, caractéristiques et avantages de la présente invention ressortiront plus clairement de la description qui suit d'un exemple de réalisation donné à titre illustratif, en référence aux dessins annexés sur lesquels :
- La Figure 1 représente une vue schématique d'une installation de freinage hydraulique incorporant un maître-cylindre conforme à la présente invention;
- La Figure 2 représente une vue en coupe longitudinale du maître-cylindre équipant l'installation de freinage de la Figure 1, et correspondant à un premier mode de réalisation ;
- La Figure 3 représente une vue à plus grande échelle d'une partie du maître-cylindre de la Figure 2,
- La Figure 4 est une vue en coupe partielle agrandie d'un maître-cylindre conforme à une première variante d'un second mode de réalisation de l'invention; et
- La Figure 5 est une vue en coupe partielle agrandie d'un maître-cylindre conforme à une seconde variante du second mode de réalisation de l'invention.

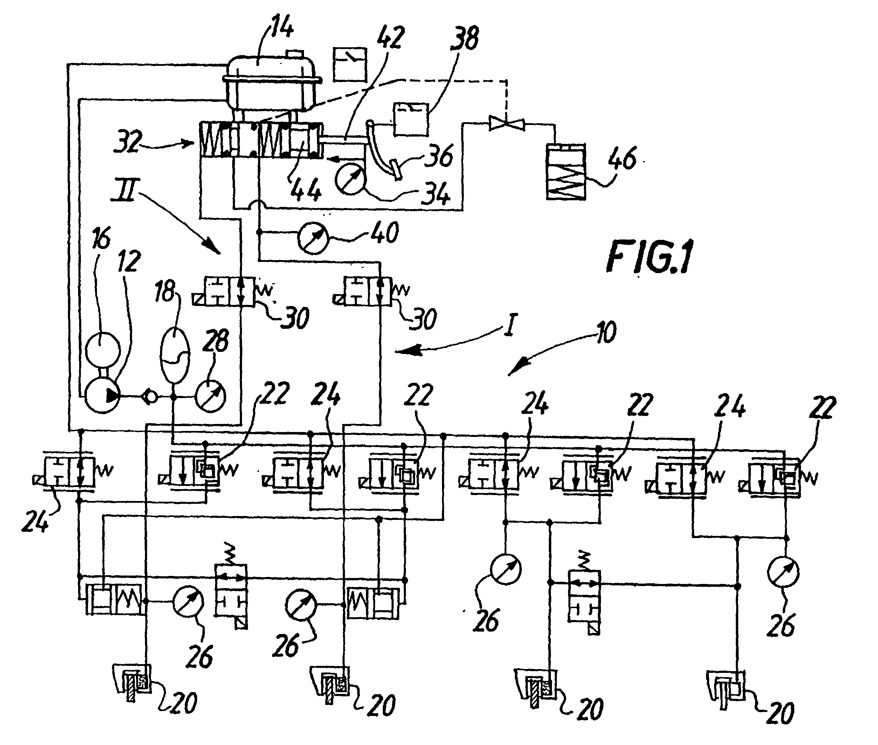

L'installation de freinage de véhicule représentée sur la Figure 1, et désignée dans son ensemble par la référence 10, est agencée sous la forme d'une installation de freinage à énergie extérieure, reliée à l'ensemble des moteurs de freins du véhicule, et d'une installation de freinage de secours à énergie musculaire, reliée par deux circuits de freinage I et II, indépendants, aux moteurs de freins des roues avant du véhicule.

Sur la figure 1, les circuits de freinage sont représentés de manière schématique par des symboles de circuits hydrauliques : le circuit de freinage à énergie extérieure comporte comme source d'énergie extérieure pour le freinage de service une pompe hydraulique 12 dont l'aspiration est connectée à un réservoir 14 d'alimentation en liquide hydraulique. La pompe hydraulique 12 est entraînée par un moteur électrique 16. Le côté refoulement de la pompe hydraulique 12 est connecté à un accumulateur hydraulique 18 qui délivre du liquide de frein sous pression pour le freinage de service, une valve limitatrice de pression (non représentée) pouvant être connectée entre les conduits d'aspiration et de refoulement de la pompe hydraulique 12 pour limiter la pression maximale de refoulement de la pompe hydraulique 12.

Des cylindres 20 de moteurs de freins de roues sont connectés sur la conduite de refoulement de la pompe hydraulique 12 et à l'accumulateur hydraulique 18 par l'intermédiaire d'une valve d'entrée 22 permettant l'accroissement de pression dans les cylindres 20. Pour abaisser la pression de freinage dans les cylindres de frein de roues 22, il est prévu une valve de sortie 24 qui met en communication le cylindre de frein de roue 20 avec le réservoir d'alimentation 14. Une pression de freinage quelconque peut ainsi être obtenue dans les cylindres de frein de roue 20 à l'aide des valves d'entrée 22 et de sortie 24, convenablement pilotées par un calculateur (non représenté), qui commande également le fonctionnement du moteur 16 de pompe et qui reçoit des signaux représentatifs de la pression régnant dans les cylindres de frein de roues délivrés par des capteurs de pression 26, et de la pression régnant dans l'accumulateur hydraulique 18 par un capteur de pression 28.

En cas de défaillance de l'installation de freinage à énergie extérieure, de façon à obtenir un freinage de secours à énergie musculaire, les circuits de freinage I et II sont reliés indépendamment l'un de l'autre, par l'intermédiaire chacun d'une valve d'arrêt 30, à un maître-cylindre tandem 32 sur lequel est monté le réservoir d'alimentation 14 et avec lequel le maître-cylindre de frein 32 communique directement. La valve d'arrêt 30 est une électrovalve à deux voies et deux positions, ouverte en position de repos, et qui est également commandée par le calculateur.

Pendant le fonctionnement en mode de freinage de service à énergie extérieure, la valve d'arrêt 30 est fermée, c'est-à-dire que, sur le plan hydraulique, le maître-cylindre de frein 32 est isolé de l'installation de freinage du véhicule. Pendant le freinage de service à énergie extérieure, le maître-cylindre de frein 32 sert de capteur de la valeur de consigne pour la pression hydraulique dans les moteurs de frein de roues 20, cette pression devant être commandée par le calculateur A cet effet, le maître-cylindre 32 est équipé d'un capteur 34 de la course de la pédale 36 d'actionnement du maître-cylindre, et d'un capteur 38 de détection de l'actionnement de cette pédale 36, un capteur 40 étant connecté au circuit primaire de freinage pour détecter la pression régnant dans le maître-cylindre, les signaux fournis par les capteurs 34, 38 et 40 étant fournis au calculateur. En variante, on peut prévoir que le capteur 38 détecte également l'effort exercé par le conducteur du véhicule sur la pédale 36.

L'installation de freinage 10 de véhicule est actionnée à l'aide de la pédale de frein 36, qui actionne une tige de commande 42 du maître-cylindre de frein 32, elle-même actionnant un piston primaire 44 coulissant dans un alésage 45 formé à l'intérieur du maître-cylindre de frein 32.

Lors d'un freinage de service à énergie extérieure provoqué par l'actionnement de la pédale de frein 36, les valves d'arrêt 30 sont fermées, et il en résulte que le liquide de frein ne peut être refoulé du maître-cylindre dans les circuits de freinage I et II. Afin que le conducteur du véhicule éprouve cependant une sensation habituelle d'actionnement de la pédale de frein 36, caractérisée par une course déterminée de la pédale 36 en relation avec la pression générée dans le circuit hydraulique, et donc avec la sensation de décélération du véhicule, un simulateur 46 d'actionnement de frein est connecté au circuit de freinage primaire I du maître-cylindre de frein 32.

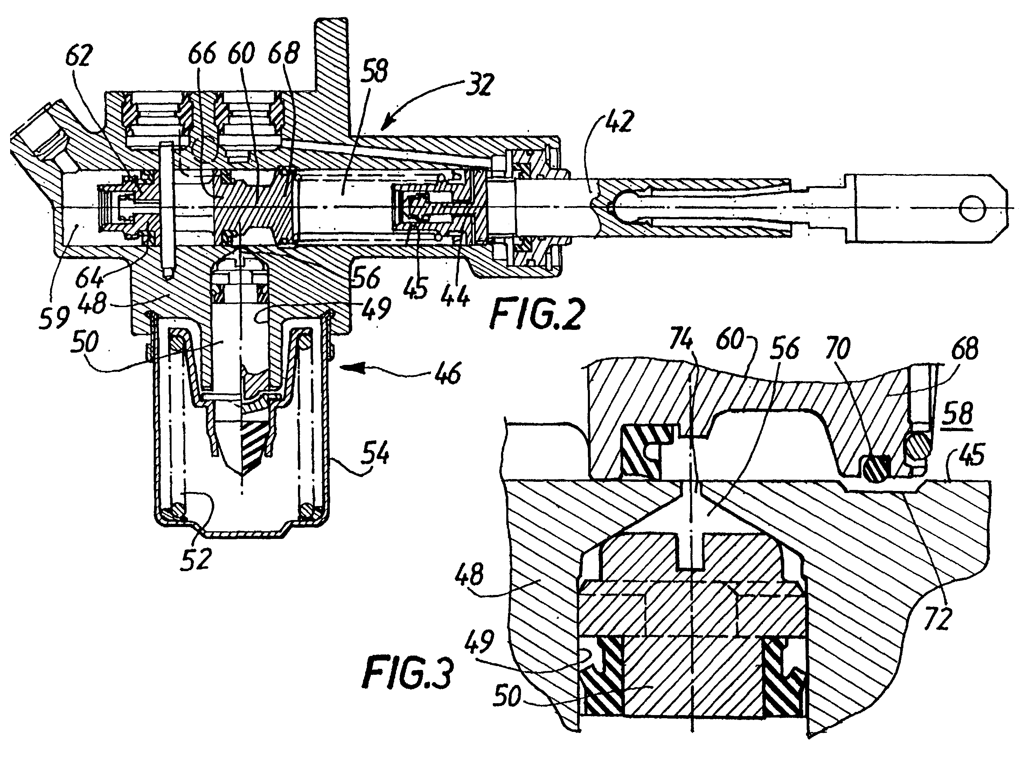

Comme on le voit mieux sur la Figure 2, le simulateur d'actionnement de frein 46 comporte un corps de simulateur 48 dans lequel est formé un alésage 49 où est susceptible de coulisser de façon étanche un piston de simulateur 50. Le corps 48 peut être agencé sous forme de cartouche à visser sur le maître-cylindre, ou, comme on l'a représenté sur la Figure 2, être d'une seule pièce avec le corps du maître-cylindre. Le piston de simulateur 50 est soumis à l'action d'un ressort de compression 52 prenant par ailleurs appui sur un capot 54 solidaire du corps de simulateur 48, et il délimite dans l'alésage 49 une chambre de simulation 56.

On va maintenant expliquer de façon succincte le fonctionnement de l'installation de freinage que l'on vient de décrire, dans l'hypothèse où tous les composants sont opérationnels. Dans cette hypothèse, les valves d'arrêt 30 sont excitées par le calculateur chaque fois que le capteur 38 détecte un actionnement de la pédale de frein 36, de sorte que ces valves 30 interdisent la communication entre le maître-cylindre et le reste de l'installation de freinage.

Lorsque le conducteur du véhicule actionne la pédale de frein 36, la tige de commande 42 actionne le piston primaire 44 du maître-cylindre qui engendre alors une augmentation de pression dans la chambre de travail primaire 58 située entre le piston primaire 44 et un piston secondaire 60 coulissant lui aussi dans l'alésage 45 et y délimitant une chambre de travail secondaire 59. Cette augmentation de pression est communiquée à la chambre de simulation 56 et s'exerce sur le piston de simulateur 50, qui se déplace alors à l'encontre de l'action du ressort de compression 52.

De façon plus précise, et comme on le voit mieux sur les Figures 2 et 3, le piston secondaire 60 est formé avec une partie 62 de coulissement et de guidage dans l'alésage 45, par exemple au moyen de deux portées 64 et 66 munies de coupelles d'étanchéité. Le piston secondaire 60 est également formé avec une portée 68, de diamètre sensiblement égal à celui de l'alésage 45, et munie d'un joint torique 70. L'alésage 45 est également formé, à l'extrémité avant de la chambre de travail primaire 58, avec une gorge périphérique 72, de telle manière que, en position de repos, la gorge 72 soit située en regard de la portée 68 du piston secondaire 60. La chambre de simulation 56 débouche par ailleurs dans l'alésage 45 en aval de la gorge 72, par une ouverture 74.

Lorsque la pression augmente dans la chambre de travail primaire 58, du liquide de freinage peut ainsi être refoulé dans la chambre de simulation 56, en passant par dessus le joint torique 70 et par l'ouverture 74. Ceci permet ainsi au piston primaire 44 de se mouvoir. Les capteurs de course 34, d'actionnement ou d'effort 38 et de pression 40 émettent alors des signaux qui sont fournis au calculateur qui pilote à son tour le moteur 16 de la pompe 12 et les électrovalves 22 et 24 pour engendrer dans les cylindres de freins de roues 20 une augmentation de pression correspondant aux signaux reçus de ces capteurs, et donc une action de freinage en rapport avec l'action du conducteur du véhicule sur la pédale de frein.

Lorsque l'un des composants de l'installation de freinage est sujet à une défaillance, celle-ci est détectée par le calculateur qui commande alors la désexcitation des valves d'arrêt 30, qui reprennent leur position de repos représentée sur la Figure 1 et permettent alors la communication entre le maître-cylindre 32 et le reste de l'installation de freinage.

Dans cette situation de défaillance, lorsque le conducteur du véhicule actionne la pédale de frein 36, la tige de commande 42 actionne le piston primaire 44 du maître-cylindre qui engendre alors une augmentation de pression dans la chambre de travail primaire 58 située entre le piston primaire 44 et le piston secondaire 60. Les valves d'arrêt 30 étant alors ouvertes, la pression s'exerçant sur le piston secondaire 60 engendre sur ce dernier une force qui le fait se mouvoir vers l'avant. Dans ce mouvement, la portée 68 se déplace et le joint torique 70 vient en contact de l'alésage 45, fermant ainsi la communication entre la chambre de travail primaire 58 et la chambre de simulation 56. Le piston primaire 60 engendre alors à son tour une augmentation de pression dans la chambre de travail secondaire 72 située entre lui et le fond de l'alésage 45. Cette augmentation de pression est alors communiquée aux moteurs de frein de roues par les circuits hydrauliques I et II.

On voit donc bien que, dans cette situation de défaillance, la chambre de simulation est mise hors circuit, de sorte que la totalité du liquide de freinage des chambres primaire et secondaire du maître-cylindre est utilisée pour effectuer le freinage de secours à énergie musculaire. La totalité de l'énergie musculaire du conducteur du véhicule est ainsi utilisée pour le freinage de secours sans que cette énergie soit dissipée dans des dispositifs annexes tels que le simulateur de course 46. Le maître-cylindre est de conception particulièrement simple, ce qui en garantit la fiabilité et le faible coût de fabrication.

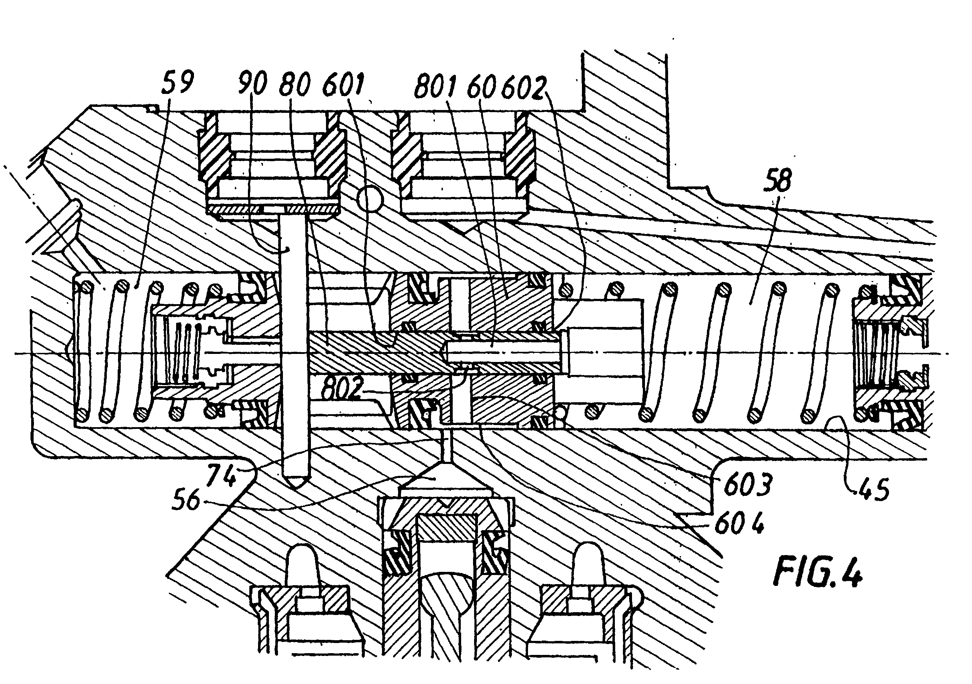

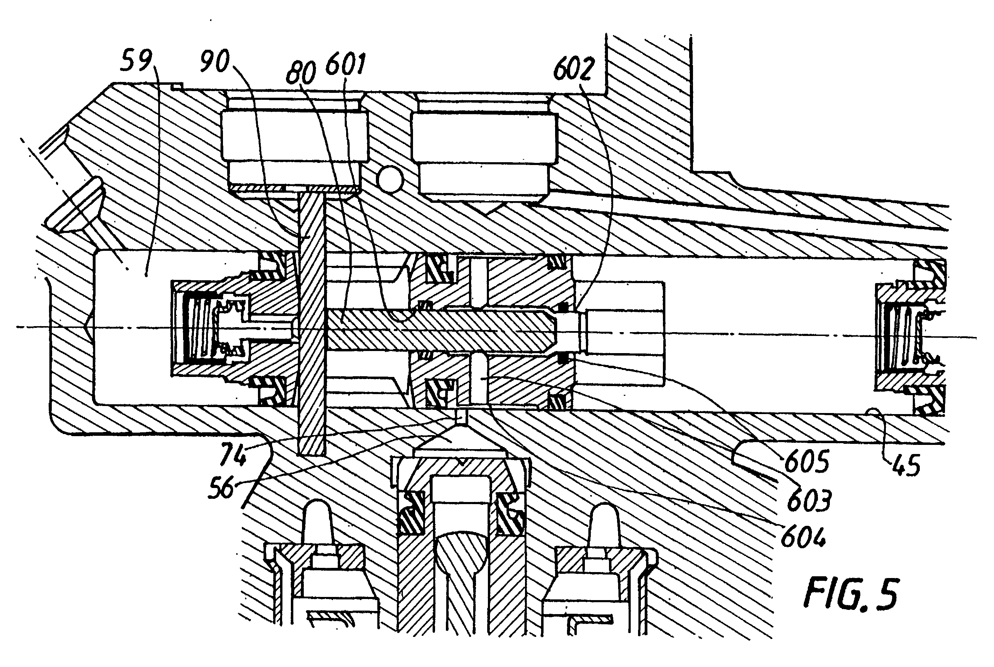

Les figures 4 et 5 illustrent respectivement des première et seconde variantes d'un second mode de réalisation de l'invention.

Comme dans le premier mode de réalisation, la chambre de simulation 56 présente un orifice d'entrée 74 qui débouche dans l'alésage 45, et des moyens de communication sélective sont prévus pour relier la chambre de simulation 56 à la chambre de travail primaire 58 lorsque le piston secondaire 60 est dans sa position de repos, et pour isoler la chambre de simulation 56 de la chambre de travail primaire 58 lorsque le piston secondaire 60 est déplacé de sa position de repos, c'est-à-dire en cas de défaillance d'un composant de l'installation de freinage.

Plus précisément, ces moyens de communication sélective comprennent essentiellement (figures 4 et 5) un perçage axial 601 et un perçage radial 603, tous deux pratiqués dans le piston secondaire 60, ainsi qu'un plongeur de forme allongée 80 qui s'appuie sur une broche 90 traversant l'alésage 45 pour rester fixe par rapport à l'alésage 45.

Le plongeur 80 est monté coulissant dans le perçage axial 601 du piston secondaire 60, ce perçage axial présentant une entrée 602 qui s'ouvre dans la chambre de travail primaire 58.

Le perçage radial 603 du piston secondaire 60 présente une sortie 604 qui communique en permanence avec la chambre de simulation 56 et qui est sélectivement mise en communication avec l'entrée 602 du perçage axial 601.

Enfin, le plongeur 80 coopère avec le perçage axial 601 pour former, au moins avec lui, un clapet hydraulique permettant d'isoler la sortie 604 du perçage radial 603 par rapport à l'entrée 602 du perçage axial 601 lorsque le piston secondaire 60 est déplacé de sa position de repos.

Dans la première variante (figure 4), le plongeur 80 présente un perçage axial borgne 801 et un passage radial 802 qui communique avec ce perçage axial borgne 801.

Le passage radial 802, qui forme un premier siège du clapet hydraulique, se trouve disposé en regard du perçage radial 603 du piston secondaire 60 lorsque ce piston est dans sa position de repos.

En revanche, lorsque le piston secondaire 60 est déplacé de sa position de repos, le passage radial 802 se trouve obturé par le perçage axial 601 du piston secondaire 60, qui forme lui-même un second siège du clapet hydraulique, interdisant ainsi l'écoulement de fluide de freinage dans la chambre de simulation en cas de défaillance d'un composant de l'installation de freinage.

Dans la seconde variante (figure 5), l'entrée 602 du perçage axial 601 du piston secondaire 60 porte un joint annulaire 605 qui forme un premier siège du clapet hydraulique.

Ainsi, lorsque le piston secondaire 60 est déplacé de sa position de repos, le joint annulaire 605 se trouve obturé par le plongeur 80, qui forme lui-même un second siège du clapet hydraulique, de sorte que tout écoulement de fluide de freinage dans la chambre de simulation est interdite en cas de défaillance d'un composant de l'installation de freinage.

## Revendications

1. Dispositif comportant un maître-cylindre (32) pour une installation de freinage hydraulique de véhicule, l'installation comportant un système de freinage de service à énergie extérieure et un système de freinage de secours à énergie musculaire pour actionner des cylindres (20) de moteurs de freins de roues, le maître-cylindre (32) étant susceptible d'être isolé des cylindres (20) de freins de roues à l'aide d'au moins une valve d'arrêt (30) pour un freinage de service à énergie extérieure, ainsi qu'un simulateur (46) de course d'actionnement de frein comportant un piston de simulateur (50) définissant une chambre de simulation (56) susceptible de recevoir du liquide de frein provenant du maître-cylindre (32) de frein, un élément élastique (52) de simulateur sollicitant le piston de simulateur (50) à l'encontre de la pression de liquide de frein dans la chambre de simulation (56), le maître-cylindre (32) étant du type en tandem et comportant un alésage (45) dans lequel des pistons primaire (44) et secondaire (60) sont montés coulissants à partir de positions de repos respectives et y délimitent respectivement des chambres de travail primaire (58) et secondaire (59), **caractérisé en ce que** la chambre de simulation (56) présente un orifice d'entrée (74) débouchant dans l'alésage (45), et **en ce que** des moyens de communication sélective (72, 70; 601, 802; 80, 601, 605) relient la chambre de simulation (56) à la chambre de travail primaire (58) lorsque le piston secondaire (60) est dans sa position de repos, et isolent la chambre de simulation (56) de la chambre de travail primaire (58) lorsque le piston secondaire (60) est déplacé de sa position de repos.

2. Dispositif selon la revendication 1, **caractérisé en ce que** les moyens de communication sélective (72, 70; 601, 802; 80, 601, 605) comprennent une gorge périphérique (72) formée dans l'alésage (45) et un élément d'étanchéité (70) porté par le piston secondaire (60) et propre à obturer sélectivement l'alésage (45) à distance de la gorge périphérique (72), la gorge périphérique (72) étant disposée dans l'alésage (45) entre le piston primaire (44) et l'orifice d'entrée (74) de la chambre de simulation (56), et l'élément d'étanchéité (70) se trouvant sélectivement en regard de la gorge périphérique (72) lorsque le piston secondaire (60) est dans sa position de repos.

3. Dispositif selon la revendication 1, **caractérisé en ce que** les moyens de communication sélective (72, 70; 601, 802; 80, 601, 605) comprennent : un perçage axial (601) pratiqué dans le piston secondaire (60) et présentant une entrée (602) s'ouvrant dans la chambre de travail primaire (58); un perçage radial (603) pratiqué dans le piston secondaire (60) et présentant une sortie (604) communiquant en permanence avec la chambre de simulation (56) et sélectivement mise en communication avec l'entrée (602) du perçage axial (601); et un plongeur allongé (80), fixe par rapport à l'alésage (45), monté coulissant dans le perçage axial (601), et coopérant au moins avec le perçage axial (601) du piston secondaire (60) pour former un clapet hydraulique isolant sélectivement la sortie (604) du perçage radial (603) de l'entrée (602) du perçage axial (601) lorsque le piston secondaire (60) est déplacé de sa position de repos.

4. Dispositif selon la revendication 3, **caractérisé en ce que** le plongeur (80) présente un perçage axial borgne (801) et un passage radial (802) communiquant avec le perçage axial borgne (801), le passage radial (802) formant un premier siège dudit clapet hydraulique, étant sélectivement disposé en regard du perçage radial (603) du piston secondaire (60) lorsque ce piston secondaire (60) est dans sa position de repos, et étant obturé par le perçage axial (601) du piston secondaire (60), qui forme lui-même un second siège dudit clapet hydraulique, lorsque ce piston secondaire (60) est déplacé de sa position de repos.

5. Dispositif selon la revendication 3, **caractérisé en ce que** l'entrée (602) du perçage axial (601) du piston secondaire (60) porte un joint annulaire (605) qui forme un premier siège dudit clapet hydraulique, et qui est sélectivement obturé par le plongeur (80), qui forme lui-même un second siège dudit clapet hydraulique, lorsque le piston secondaire (60) est déplacé de sa position de repos.

6. Dispositif selon l'une quelconque des revendications 3 à 5, **caractérisé en ce que** le plongeur (80) est en appui sur une broche (90) traversant l'alésage (45).

## Claims

1. Device comprising a master cylinder (32) for a vehicle hydraulic braking installation, the installation comprising a service braking system using external energy, and an emergency braking system using muscle power for actuating wheel brake cylinders (20), it being possible for the master cylinder (32) to be isolated from the wheel brake cylinders (20) by at least one shut-off valve (30) for service braking using external energy, and a simulator (46) simulating the brake actuation travel and comprising a simulator piston (50) defining a simulation chamber (56) which can receive brake fluid from the brake master cylinder (32), an elastic simulator element (52) urging the simulator piston (50) against the action of the pressure of the brake fluid in the simulation chamber (56), the master cylinder (32) being of the tandem type and comprising a bore (45) in which a primary piston (44) and a secondary piston (60) are mounted so that they can slide from respective positions of rest and therein delimit a primary working chamber (58) and a secondary working chamber (59), respectively, **characterized in that** the simulation chamber (56) has an inlet orifice (74) opening into the bore (45), and **in that** means (72, 70; 601, 802; 80, 601, 605) of selective communication connect the simulation chamber (56) to the primary working chamber (58) when the secondary piston (60) is in its position of rest, and isolate the simulation chamber (56) from the primary working chamber (58) when the secondary piston (60) is moved away from its position of rest.

2. Device according to Claim 1, **characterized in that** the means (72, 70; 601, 802; 80, 601, 605) of selective communication comprise a peripheral groove (72) formed in the bore (45) and a sealing element (70) borne by the secondary piston (60) and capable selectively of shutting off the bore (45) some distance from the peripheral groove (72), the peripheral groove (72) being arranged in the bore (45) between the primary piston (44) and the inlet orifice (74) of the simulation chamber (56), and the sealing element (70) being located selectively facing the peripheral groove (72) when the secondary piston (60) is in its position of rest.

3. Device according to Claim 1, **characterized in that** the means (72, 70 ; 601, 802; 80, 601, 605) of selective communication comprise: an axial hole (601) made in the secondary piston (60) and having an inlet (602) opening into the primary working chamber (58); a radial hole (603) made in the secondary piston (60) and having an outlet (604) permanently communicating with the simulation chamber (56) and selectively placed in communication with the inlet (602) of the axial hole (601); and an elongate plunger (80) which is stationary with respect to the bore (45), mounted so that it can slide in the axial hole (601) and interacting at least with the axial hole of the secondary piston (60) to form a hydraulic valve which selectively isolates the outlet (604) of the radial hole (603) from the inlet (602) of the axial hole (601) when the secondary piston (60) is moved away from its position of rest.

4. Device according to Claim 3, **characterized in that** the plunger (80) has a blind axial hole (801) and a radial passage (802) communicating with the blind axial hole (801), the radial passage (802) forming a first seat for the said hydraulic valve, being arranged selectively facing the radial hole (603) of the secondary piston (60) when this secondary piston (60) is in its position of rest, and being shut off by the axial hole (601) of the secondary piston (60) which itself forms a second seat for the said hydraulic valve, when this secondary piston (60) is moved away from its position of rest.

5. Device according to Claim 3, **characterized in that** the inlet (602) of the axial hole (601) in the secondary piston (60) bears an annular seal (605) which forms a first seat for the said hydraulic valve and which is selectively shut off by the plunger (80), which itself forms a second seat for the said hydraulic valve, when the secondary piston (60) is moved away from its position of rest.

6. Device according to any one of Claims 3 to 5, **characterized in that** the plunger (80) rests on a pin (90) passing across the bore (45).

## Patentansprüche

1. Vorrichtung mit einem Hauptzylinder (32) für eine hydraulische Fahrzeugbremsanlage, wobei die Anlage ein Betriebsbremssystem mit äußerer Energie und ein Sicherheitsbremssystem mit Muskelenergie umfaßt, um Zylinder (20) der Radbremsbetätigungsvorrichtungen zu betätigen, wobei der Hauptzylinder (32) von den Zylindern (20) der Radbremsen mit Hilfe von wenigstens einem Sperrventil (30) für eine Fußbremsung mit äußerer Energie isoliert werden kann, sowie einen Simulator (46) für den Bremsbetätigungsweg, der einen Simulatorkolben (50) aufweist, welcher eine Simulationskammer (56) definiert, die Bremsflüssigkeit aufnehmen kann, die von dem Hauptbremszylinder (32) stammt, sowie ein elastisches Simulatorelement (52), das den Simulatorkolben (50) gegen den Druck der Bremsflüssigkeit in der Simulationskammer (56) beaufschlagt, wobei der Hauptzylinder (32) ein Tandemzylinder ist und eine Bohrung (45) aufweist, in der ein Primärkolben (44) und ein Sekundärkolben (60) so aufgenommen sind, daß sie ausgehend von einer jeweiligen Ruhestellung verschiebbar sind und dort eine erste Arbeitskammer (58) bzw. eine zweite Arbeitskammer (59) begrenzen, **dadurch gekennzeichnet, daß** die Simulationskammer (56) eine Eingangsöffnung (74) aufweist, die in die Bohrung (45) mündet, und daß Mittel (72, 70; 601, 802; 80, 601, 605) zum selektiven Verbinden die Simulationskammer (56) mit der ersten Arbeitskammer (58) verbinden, wenn sich der Sekundärkolben (60) in seiner Ruhestellung befindet, und die Simulationskammer (56) von der ersten Arbeitskammer (58) isolieren, wenn der Sekundärkolben (60) aus seiner Ruhestellung heraus verstellt ist.

2. Vorrichtung nach Anspruch 1, **dadurch gekennzeichnet, daß** die Mittel (72, 70; 601, 802; 80, 601, 605) zum selektiven Verbinden eine Umfangsnut (72) aufweisen, die in der Bohrung (45) gebildet ist, und ein Dichtelement (70), das von dem Sekundärkolben (60) getragen ist und selektiv die Bohrung (45) im Abstand von der Umfangsnut (72) verschließen kann, wobei die Umfangsnut (72) in der Bohrung (45) zwischen dem Primärkolben (44) und der Eingangsöffnung (74) der Simulationskammer (56) angeordnet ist, und wobei sich das Dichtelement (70) selektiv gegenüber der Umfangsnut (72) befindet, wenn sich der Sekundärkolben (60) in seiner Ruhestellung befindet.

3. Vorrichtung nach Anspruch 1, **dadurch gekennzeichnet, daß** die Mittel (72, 70; 601, 802; 80, 601, 605) zum selektiven Verbinden umfassen: eine axiale Bohrung (601), die in dem Sekundärkolben (60) ausgebildet ist und einen Eingang (602) aufweist, der sich in die erste Arbeitskammer (58) öffnet, eine radiale Bohrung (603), die in dem Sekundärkolben (60) ausgebildet ist und einen Ausgang (604) aufweist, der stets mit der Simulationskammer (56) verbunden ist und selektiv mit dem Eingang (602) der axialen Bohrung (601) verbunden ist, und einen länglichen Tauchkolben (80), der bezüglich der Bohrung (45) feststehend ist, gleitend in der axialen Bohrung (601) aufgenommen ist und wenigstens mit der axialen Bohrung (601) des Sekundärkolbens (60) zusammenwirkt, um ein hydraulisches Ventilelement zu bilden, das selektiv den Ausgang (604) der radialen Bohrung (603) vom Eingang (602) der axialen Bohrung (601) isoliert, wenn der Sekundärkolben (60) aus seiner Ruhestellung heraus verstellt ist.

4. Vorrichtung nach Anspruch 3, **dadurch gekennzeichnet, daß** der Tauchkolben (80) eine axiale Blindbohrung (801) aufweist und eine radiale Durchführung (802), die mit der axialen Blindbohrung (801) verbunden ist, wobei die radiale Durchführung (802) einen ersten Sitz des hydraulischen Ventilelements bildet, der selektiv gegenüber der radialen Bohrung (603) des Sekundärkolbens (60) angeordnet ist, wenn sich dieser Sekundärkolben (60) in seiner Ruhestellung befindet, und der durch die axiale Bohrung (601) des Sekundärkolbens (60), der wiederum einen zweiten Sitz des hydraulischen Ventilelements bildet, verschlossen ist, wenn dieser Sekundärkolben (60) aus seiner Ruhestellung heraus verstellt ist.

5. Vorrichtung nach Anspruch 3, **dadurch gekennzeichnet, daß** der Eingang (602) der axialen Bohrung (601) des Sekundärkolbens (60) eine ringförmige Dichtung (605) trägt, die einen ersten Sitz des hydraulischen Ventilelements bildet, und die selektiv durch den Tauchkolben (80), der wiederum einen zweiten Sitz des hydraulischen Ventilelements bildet, verschlossen ist, wenn der Sekundärkolben (60) aus seiner Ruhestellung heraus verstellt ist.

6. Vorrichtung nach einem der Ansprüche 3 bis 5, **dadurch gekennzeichnet, daß** der Tauchkolben (80) auf einem Stift (90) anliegt, der die Bohrung (45) durchquert.
